**Europäisches Patentamt**

**(19) European Patent Office**

**Office européen des brevets**

(11) Publication number : **0 364 048 B1**

(12) # EUROPEAN PATENT SPECIFICATION

(45) Date of publication of patent specification :
05.08.92 Bulletin 92/32

(51) Int. Cl.⁵ : **A01J 25/13**

(21) Application number : **89202559.4**

(22) Date of filing : **10.10.89**

(54) **Plastic cheese mould with whey discharge recesses formed on the upright walls during injection moulding.**

(30) Priority : **11.10.88 NL 8802493**

(43) Date of publication of application :
**18.04.90 Bulletin 90/16**

(45) Publication of the grant of the patent :
**05.08.92 Bulletin 92/32**

(84) Designated Contracting States :
**AT BE CH DE ES FR GB GR LI NL SE**

(56) References cited :
**DE-A- 2 909 960**
**FR-A- 2 063 234**
**NL-A- 7 302 524**
**NL-A- 7 705 990**
**NL-A- 7 900 831**

(73) Proprietor : **CRELLIN B.V.**
**24, Nikkelstraat**
**NL-3067 GR Rotterdam (NL)**

(72) Inventor : **Tameris, Hendrikus Matheus**
**81c, Verboomstraat**
**NL-3082 JC Rotterdam (NL)**

(74) Representative : **van der Veken, Johannes Adriaan et al**
**EXTERPATENT B.V. P.O. Box 90649**
**NL-2509 LP 's-Gravenhage (NL)**

## Description

The invention relates to a substantially rigid plastic cheese mould, comprising a bottom and upright walls provided with drainage holes, and also having at the innerside of the walls whey discharge recesses which open into the drainage holes, said recesses forming a net structure.

A plastic cheese mould of the abovementioned type is generally known from NL-A-7302524.

The whey discharge recesses on the innerside of the wall of such a cheese mould are in this case whey discharge grooves formed by mechanical working, such as milling or sawing, of the innerside of the walls. Due to the mechanical working of the upright walls, such as milling or sawing, the whey discharge recesses formed by the working of the innerside of the wall may be irregular. After the removal of a pressed cheese from such a cheese mould it might occur that residues of curd remain behind after cleaning of the cheese mould.

The object of the invention is now to provide a cheese mould of the above-mentioned type which does not present this disadvantage, due to the fact that the upright wall of the cheese mould is provided with whey discharge recesses without mechanical working of the innerside of the wall of the cheese mould.

This object is achieved according to the invention in that whey discharge recesses are bounded by at least two ribs formed during injection moulding of the walls and said ribs comprise additional channels interconnecting whey discharge recesses located at different sides of the ribs,

Forming the whey discharge recesses during the injection moulding of the upright walls of the cheese mould means that in the finished cheese mould there are no burrs or projecting parts of the recesses on which curd residues can remain behind after moulding of the cheese.

It is consequently possible to clean such a cheese mould very reliably and well after use, without the risk of undesirable infections arising from these residues when new curd is being pressed.

Due to the presence of the additional channels interconnecting whey discharge recesses located at different sides of the ribs, the removal of whey is considerably improved.

It is known per se to mould cheese by means of a cheese mould and a removably therein disposed cheese net which is made of threads of a thermoplastic material, in particular polypropylene threads. However, this cheese net lies loose against the inside wall of the cheese vat, which means that whey pressed out of the curd can escape at the points of intersection along the threads resting on the innerside of the wall of the cheese mould.

It has now surprisingly been found that the cheese mould whose innerside of the walls has a net structure formed by injection moulding, i.e. a cheese mould in which a net used according to the known state of the art is integral with the wall, provides a particularly good discharge of whey to the drainage holes present in the upright walls of the cheese vat.

Another major advantage of a plastic cheese mould in which the innerside has whey discharge recesses which together form a net structure formed by injection moulding is that cheeses which have the hitherto generally known cheese wall structure can be obtained with same.

It should be noted that DE-A-2909960 discloses a thin walled plastic cheese mould with deformable walls, said walls being provided with drainage apertures which are interconnected by straight drainage channels. The whole mould with drainage apertures and drainage channels has been formed by injection moulding.

The net structure is advantageously formed by first structure ribs running in the vertical direction of an upright wall and second structure ribs running in the longitudinal direction.

In particular, the first structure ribs are higher than the second structure ribs, since this design leads to easier removal of a pressed cheese from such a mould.

It is particularly advantageous for the drainage holes to be drainage slits being formed during injection moulding of the walls and expediently diverging towards the outerside.

Drainage slits formed during the injection moulding of the walls have the advantage that even the drainage slits which are provided in known cheese mould by mechanical working of the walls do not have projections or burrs which are a disadvantage from the hygienic point of view. Making the drainage holes diverging towards the outerside means that the moulding device shaping means used in a moulding device for the drainage slits can also be removed easily from the finished cheese mould.

A cheese mould according to the invention is preferably rectangular and formed from upright injection moulded wall parts being welded together in the corners, since it is possible in this way to injection mould in a moulding device straight wall parts which are subsequently divided in wall parts of the desired size and welded to each other in the corners by heated-tool welding, such as mirror or ultrasonic welding.

In this way it is possible to mould cheese moulds with much cheaper moulding devices than would be necessary for forming a rectangular cheese mould by means of a single injection mould.

The outside of the upright walls of the cheese mould are advantageously provided, during the injection moulding, with reinforcement ribs which extend parallel to and/or at right angles to the bottom face. This makes it easier to absorb the forces exerted on the upright walls during pressing of the curd to a cheese in such a cheese mould.

For even greater reinforcement, a metal reinforcement strip, preferably provided with bores, can advantageously be embedded in at least one reinforcement rib. This reinforcement strip is introduced into recesses formed in reinforcement ribs during injection moulding of upright walls, whereafter the recesses are heat-sealed. This prevents particularly sagging of the walls during pressing of the curd.

The cheese mould can also be reinforced by means of a surrounding frame of interconnected metal strips.

A plastic cheese mould according to the invention is preferably rectangular and formed by walls which are welded together in the corners. In this way a cheese mould according to the invention can be manufactured with simple moulds, since all that is neeeded is a mould for forming upright walls, whereafter in a subsequent separate operation the walls are welded to each other in the corners by mirror or ultrasonic welding. It has been found that in this way a plastic cheese mould being very resistant to the forces exerted on the upright walls during pressing of the curd to cheese can be obtained.

The invention will now be explained with reference to an example of an embodiment shown in the drawing, in which:

Fig. 1 shows a cheese mould according to the invention;

Fig. 2 is a detail of an outerside of the wall of a cheese mould according to fig. 1;

Fig. 3 is a detail of the innerside of the upright wall of a cheese mould according to fig. 1;

Fig. 3a is a cross-section of a mould in which an upright wall of a cheese mould according to fig. 1 is formed;

Fig. 4 is a part of a longitudinal section of an upright wall of a cheese mould according to the invention;

Fig. 5 is a detail of the inner side of the wall of whey discharge recesses which form a net structure formed by injection moulding;

Fig. 6 is a part of a longitudinal section of an upright wall of a cheese mould provided with a metal reinforcement strip.

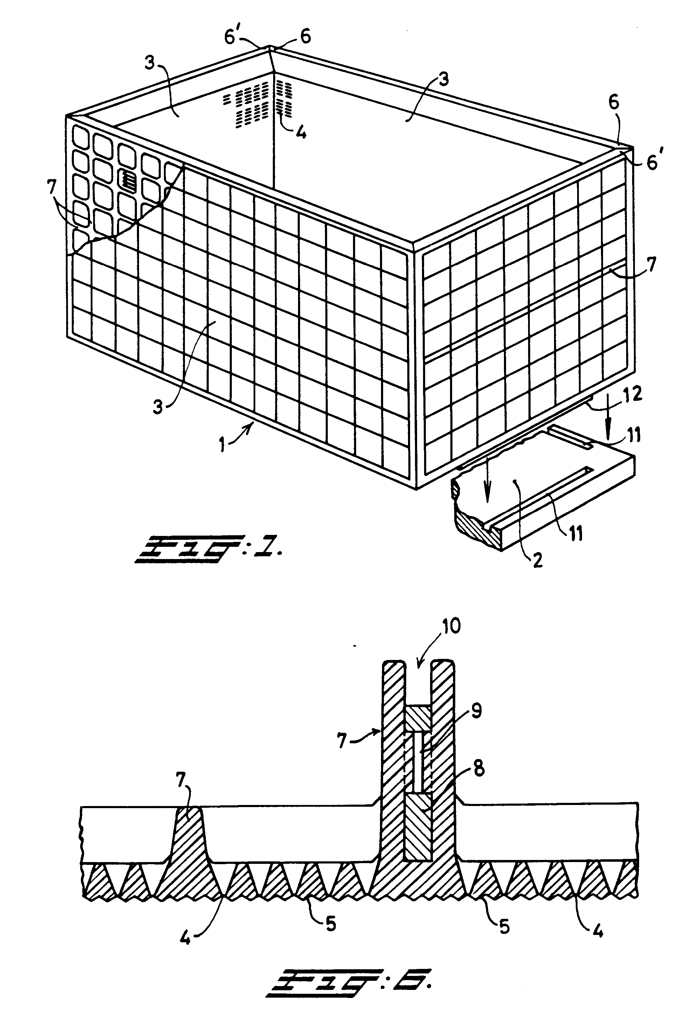

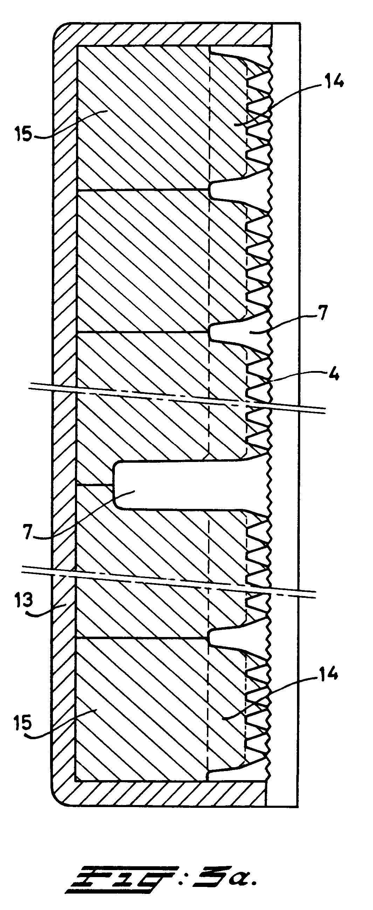

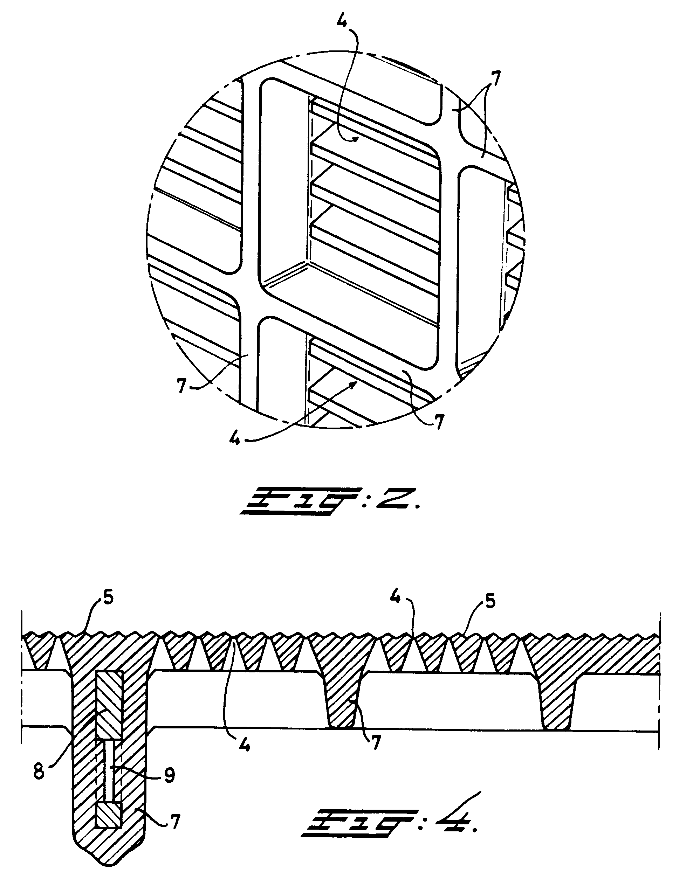

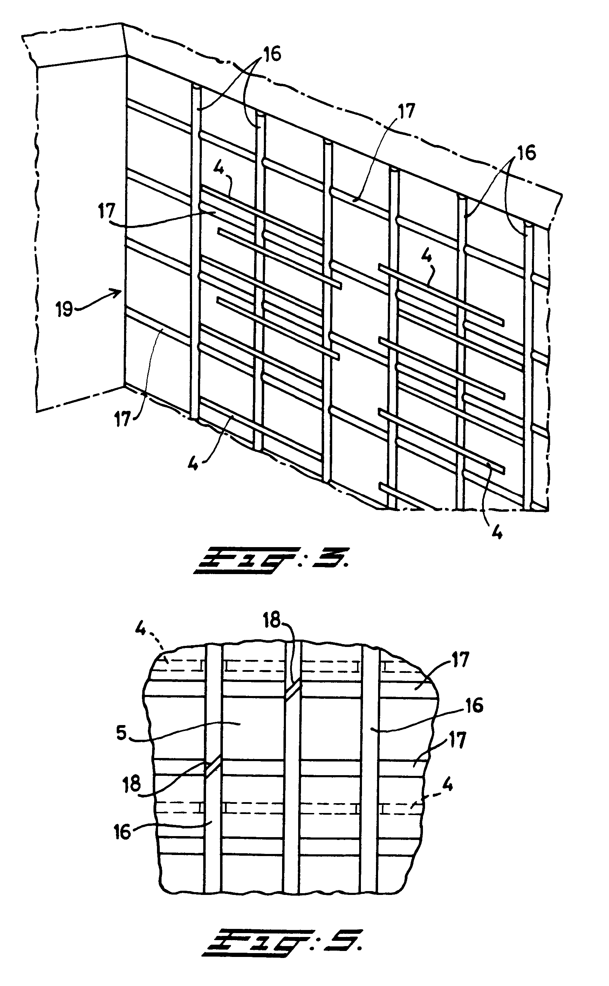

Fig. 1 shows a cheese mould 1 of plastic, particularly polyethylene, comprising four upright walls 3 which together bound a rectangular cheese mould.

The upright walls 3, which are always joined together at their corners 6, 6' by heated-tool welding, such as ultrasonic welding, and thereby form the rectangular cheese mould, can be joined to a bottom 2, provided with connecting grooves 11 which can contain connecting ribs 12 located on the bottom side of each upright wall 3. The corners of the walls are bevelled in order to permit good welding together of the corners of the upright walls 3.

The use of separate upstanding walls to be heat-sealed to each other is very advantageous as now only flat wall parts have to be injection moulded thereby avoiding the application of complicated moulding devices. Moreover walls 3 of appropriate size may be separated from an in one step injection moulded part of greater size.

The upright walls 3 are provided with drainage holes in the form of drainage slits 4 formed during the injection moulding of the walls. In order to ensure that after injection moulding of the cheese mould in a moulding device 13 the mould shaping parts 14 for shaping the slits 4 are easily removable from the finished wall 3, the drainage slits 4 and the mould shaping parts 14 diverge towards the outside.

The drainage slits 4 are expediently disposed in rows 19 running in the lengthwise direction of the walls 3, the drainage slits 4 of one row being staggered relative to the row above.

In order to obtain a cheese mould being resistant to the great forces exerted during pressing of the curd to a cheese in such a cheese mould, the walls 3 may be provided on the outside with reinforcement ribs 7 extending both at right angles and parallel to the bottom 2. For this, the moulding device 13 is provided with moulding blocks 15 being integral with the moulding device, shaping parts 14.

For further reinforcement, it is possible during injection moulding of the cheese mould to provide a reinforcement rib 7 with a recess 10 in which a metal reinforcement strip 8, expediently provided with through-running holes 9, can be fitted after removal from the mould. Heat-sealing the aperture 10 after fitting of the metal reinforcement strip 8 means that a cheese vat with reinforcement ribs 7 which are additionally reinforced by a metal reinforcement strip 8 is obtained. Through heating of the plastic it can be ensured that in the finished product the plastic extends through the holes 9 of the metal reinforcement strip 8.

In a very convenient embodiment the cheese mould is reinforced by surrounding same with a metal reinforcing frame such as formed by interconnected metal strips.

In case of surrounding reinforcement it is even possible not to interconnect the walls of the cheese mould by heatsealing and to leave the walls loose with respect to each other.

According to the invention the innerside of the wall of the diese mould is provided with whey discharge recesses 5 which together form a cheese net structure formed by injection moulding. This net structure, preferably a cheese net structure, is formed by first structure ribs 16 running in the vertical direction of the upright walls 3 and second structure ribs 17 running in the lengthwise direction of the upright walls 3.

For improvement of the removal of a pressed cheese from such a cheese mould, the first structure ribs 16 are advantageously of a greater uniform height than the second structure ribs 17. At the points of intersection of first and second structure ribs the height is determined only by the height of the first structure ribs 16.

In certain cases it can be advisable to form additional channels 18 on the innerside of the wall(s) during injection moulding, which connect the whey discharge recesses 5, the openings which in the known cheese mould were bounded by the thread of a detachable cheese net.

## Claims

1. A substantially rigid plastic cheese mould (1), comprising a bottom (2) and upright walls (3) provided with drainage holes (4), and also having at the innerside of the walls whey discharge recesses (5) which open into the drainage holes (4), said recesses (5) forming a net structure, characterized in that said whey discharge recesses (5) are bounded by at least two ribs (16) formed during injection moulding of the walls and said ribs (16) comprise additional channels (18) interconnecting whey discharge recesses (5) located at different sides of the ribs (16).

2. Cheese mould according to claim 1, characterized in that the net structure comprises first structure ribs (16) running in the vertical direction of an upright wall and second structure ribs (17) running in the lengthwise direction.

3. Cheese mould according to claim 2, characterized in that the first structure ribs (16) are higher than the second structure ribs (17).

4. Cheese mould according to anyone of claims 1-3, characterized in that the drainage holes (4) are drainage slits (4) being formed during injection moulding of the walls.

5. Cheese mould according to anyone of claims 1-4, characterized in that the drainage slits (4) diverge outwardly and preferably said drainage slits are disposed staggered relative to each other, as seen in the vertical direction, in rows running in the lengthwise direction.

6. Cheese mould according to anyone of claims 1-5, characterized in that the cheese mould is angular in cross section, preferably rectangular and is formed by upright injection moulded wall parts engaging each other in the corners (6, 6'), particularly connected to each other by welding.

7. Cheese mould according to anyone of claims 1-6, characterized in that the outerside of the upright wall(s) is provided with reinforcement ribs (7) during the injection moulding of the walls, preferably the reinforcement ribs (7) extend parallel and/or at right angles to the bottom face.

8. Cheese mould according to anyone of claims 1-7, characterized in that the cheese mould is provided with at least one reinforcing strip (8).

9. Cheese mould according to claim 9, characterized in that a metal reinforcement strip (8), preferably provided with through bores, is embedded in at least one reinforcement rib (7).

10. Cheese mould according to claim 9, characterized in that a reinforcement strip is provided in recesses (10) formed in reinforcement ribs (7) during injection moulding of upright walls, and thereafter the recesses (10) are heatsealed.

11. A plastic cheese mould wall for forming a substantially rigid plastic cheese mould with an angular cross section having at an inner side of the wall whey discharge recesses (5) which open into drainage holes, characterized in that whey discharge recesses (5) are bounded by at least two ribs (16) formed during injection moulding of the walls and said ribs comprise additional channels (18) interconnecting whey discharge recesses (5) located at different sides of the ribs (16).

## Patentansprüche

1. Im wesentlichen steife Käseform aus Kunststoff (1), welche einen Boden (2) und aufrecht stehende Wandungen (3) mit Ablauföffnungen (4) aufweist, wobei auf der Innenseite der Wandungen Molkeabführrinnen (5) ausgebildet sind, die eine Netzstruktur bilden, dadurch gekennzeichnet, daß die Molkeablaufrinnen (5) von mindestens zwei Rippen (16) begrenzt werden, die während des Spritzgießens der Wandungen gebildet werden, und daß die Rippen (16) zusätzliche Kanäle (18) aufweisen, welche die zu verschiedenen Seiten der Rippen (16) befindlichen Molkeabführrinnen (5) miteinander verbinden.

2. Käseform nach Anspruch 1, dadurch gekennzeichnet, daß die Netzstruktur erste Strukturrippen (16) aufweist, die in vertikaler Richtung einer aufrecht stehenden Wandung verlaufen, sowie zweite Strukturrippen (17), die sich in Längsrichtung erstrecken.

3. Käseform nach Anspruch 2, dadurch gekennzeichnet, daß die ersten Strukturrippen (16) höher als die zweiten Strukturrippen (17) sind.

4. Käseform nach einem der Ansprüche 1 bis 3, dadurch gekennzeichnet, daß die Ablauföffnungen (4) Ablaufschlitze (4) sind, die während des Spritzgießens der Wandungen ausgebildet werden.

5. Käseform nach einem der Ansprüche 1 bis 4, dadurch gekennzeichnet, daß die Ablaufschlitze (4) sich nach außen erweitern und daß die Ablaufschlitze vorzugsweise in vertikaler Richtung gesehen gegeneinander versetzt in Reihen angeordnet sind, welche in Längsrichtung verlaufen.

6. Käseform nach einem der Ansprüche 1 bis 5, dadurch gekennzeichnet, daß die Käseform im Querschnitt eckig, vorzugsweise rechteckig, ist und aus aufrecht stehenden spritzgegossenen Wandungsteilen gebildet ist, die in den Eckbereichen (6, 6′) miteinander in Eingriff stehen und insbesondere durch Schweißen miteinander verbunden sind.

7. Käseform nach einem der Ansprüche 1 bis 6, dadurch gekennzeichnet, daß die Außenseite der aufrecht stehenden Wandung(en) während des Spritzgießens der Wandungen mit Verstärkungsrippen (7) versehen wird, wobei sich die Verstärkungsrippen (7) vorzugsweise parallel und/oder unter rechtem Winkel zur Bodenfläche erstrecken.

8. Käseform nach einem der Ansprüche 1 bis 7, dadurch gekennzeichnet, daß daß die Käseform mindestens einen Streifen (8) zur Aussteifung aufweist.

9. Käseform nach Anspruch 9, dadurch gekennzeichnet, daß ein Aussteifungsstreifen (8) aus Metall, der vorzugsweise durchgehende Bohrungen aufweist, in mindestens-eine Verstärkungsrippe (7) eingebettet ist.

10. Käseform nach Anspruch 9, dadurch gekennzeichnet, daß in Vertiefungen (10), die in Verstärkungsrippen (7) während des Spritzgießens der aufrecht stehenden Wandungen ausgebildet werden, ein Aussteifungsstreifen angeordnet wird, und daß anschließend die Vertiefungen (10) heißversiegelt werden.

11. Käseformwandung aus Kunststoff zur Bildung einer im wesentlichen steifen Käseform aus Kunststoff mit eckigem Querschnitt, welche auf einer Innenseite der Wandung Molkeabführrinnen (5) aufweist, die in Ablauflöcher münden, dadurch gekennzeichnet, daß die Molkeabführrinnen (5) durch mindestens zwei Rippen (16) begrenzt werden, die während des Spritzgießens der Wandungen gebildet werden, und daß die Rippen zusätzliche Kanäle (18) aufweisen, welche zu verschiedenen Seiten der Rippen (16) befindliche Molkeabführrinnen (5) untereinander verbinden.

## Revendications

1. Moule à fromage en matière plastique pratiquement rigide comprenant un fond (2) et une ou des paroi(s) verticale(s) (3), pourvues d'ouvertures de drainage (4) et comportant aussi sur leur(s) côté(s) intérieur(s) des creux d'évacuation de lactosérum (5) qui s'ouvrent dans les ouverture(s) de drainage (4), lesdits creux d'évacuation (5) formant une structure en réseau, caractérisé en ce que lesdits creux d'évacuation de lactosérum (5) sont reliés par au moins deux nervures (16) formées au cours du moulage par injection des parois et en ce que lesdites nervures (16) comprennent des canaux supplémentaires (18) interconnectant des creux d'évacuation de lactosérum (5) situés de côtés différents des nervures (16).

2. Moule à fromage selon la revendication 1, caractérisé en ce que la structure en réseau comprend des premières nervures de structure (16) courant dans le sens vertical d'une paroi verticale et des secondes nervures de structure (17) courant dans le sens longitudinal.

3. Moule à fromage selon la revendication 2, caractérisé en ce que les premières nervures de structure (16) sont plus hautes que les secondes nervures de structure (17).

4. Moule à fromage selon l'une des revendications 1 à 3, caractérisé en ce que les trous de drainage (4) sont des fentes de drainage (4) formées au cours du moulage par injection des parois.

5. Moule à fromage selon l'une des revendications 1 à 4, caractérisé en ce que les fentes de drainage (4) divergent vers l'extérieur et, de préférence, sont décalées les unes par rapport aux autres, vu dans le sens vertical, en rangées dans le sens longitudinal.

6. Moule à fromage selon l'une des revendication 1 à 5, caractérisé en ce que les moule à fromage est en coupe angulaire, de préférence rectangulaire, et est fabriqué par des parties de parois verticales moulées par injection en contact les unes avec les autres dans les coins (6, 6′), en particulier reliées les unes aux autres par soudure.

7. Moule à fromage selon l'une des revendications 1 à 6, caractérisé en ce que l'extérieur de la ou des paroi(s) verticale(s) est pourvu de nervures de renfort (7) au cours du moulage par injection des parois, de préférence les nervures de renfort (7) étant parallèles et/ou perpendiculaires à la face du fond.

8. Moule à fromage selon l'une des revendications 1 à 7, caractérisé en ce que le moule à fromage est pourvu d'au moins une bande de renfort (8).

9. Moule à fromage selon la revendication 8, caractérisé en ce qu'une bande de renfort (8) en métal, de préférence pourvue de trous de part en part, est enrolée dans un moins une nervure de renfort (7).

10. Moule à fromage selon la revendication 9, caractérisé en ce qu'une bande de renfort est prévue dans des creux (10) formés dans des nervures de renfort (7) au cours du moulage par injection des parois verticales, et qu'ensuite les creux (10) sont scellés par chauffage.

11. Paroi de moule à fromage en matière plastique pour former un moule à fromage en matière plastique pratiquement rigide à coupe angulaire comportant du côté interne de la paroi des creux d'évacuation de lactosérum (5) qui débouchent dans des trous de drainage, caractérisée en ce que les trous d'évacuation de lactosérum (5) sont limités par au moins deux nervures (16) formées au cours du moulage par injection des parois et en ce que lesdites nervures comprennent des canaux supplémentaires (18) interconnectant des creux d'évacuation de lactosérum (5) situés de différents côtés des nervures (16).

Fig: 1.

Fig: 6.

FIG: 3a.

$\equiv \mathbf{I} \mathbf{G} : \mathbf{Z}.$

$\equiv \mathbf{I} \mathbf{G} : \mathbf{4}.$

*Fig: 3.*

*Fig: 5.*